# EUROPEAN PATENT APPLICATION

(11) **EP 1 372 103 A1**
(43) Date of publication of application: **17.12.2003**
(21) Application number: 02254162.7
(22) Date of filing: 14.06.2002
(51) Int. Cl.: G06K 7/00, G01S 13/02, G07C 9/00, G06K 19/07

(54) **Electronic identification system**

(71) Applicant: Turner, Christopher Gordon Gervase, Chesham, Bucks HP5 3LW (GB); Davidson, William E., Durham, North Carolina, 27707 (US)
(72) Inventor: Turner, Christopher Gordon Gervase, Chesham, Bucks HP5 3LW (GB); Davidson, William E., Durham, North Carolina, 27707 (US)
(74) Representative: Bingham, Ian Mark

(57) **Abstract**

The invention relates to a method of identifying a plurality of transponders each of which transmits data at intervals to a receiver. The invention also relates to an identification system comprising a plurality of transponders and a receiver, to the transponders themselves and to an integrated circuit for use in a transponder. The transponder repeats data to the receiver at random or pseudo-random intervals in length. The intervals are directly or indirectly dependent on the output signal from a counter responsive to a physical characteristic of the transponder.

## Description

### FIELD OF INVENTION

This invention relates to a method of identifying a plurality of transponders each of which transmits data at intervals to a receiver. The invention also relates to an identification system comprising a plurality of transponders and a receiver, to the transponders themselves and to an integrated circuit for use in a transponder.

### BACKGROUND TO THE INVENTION

Identification systems are known in which a plurality of transmitters, typically transponders (commonly called tags), are activated by a power signal (or an "interrogation signal") and then transmit signals, usually containing identification data to a receiver, which typically forms part of the interrogator. The signals may be transmitted in many ways, including electromagnetic energy, eg. radio frequency (RF), infra red (IR), coherent light and sound, eg. ultra-sound. For example the transmission may be achieved by actual emission of RF energy by the transponders, or by the modulation of the reflectivity of an antenna of the transponder, resulting in varying amounts of RF energy in the interrogation signal being reflected or backscattered from the transponder antenna.

Radio Frequency Identification systems are used to remotely identify, take a census of, locate or otherwise interact with people, objects or groups or clusters of people or objects. The systems usually comprise interrogators also known as readers, and transponders also known as tags.

It is not usually a problem for a reader to communicate with a single tag which is presented to the reader, such as in an access control system. However in the situation where many tags may be present in a reader's field of views, such as a crowd of people, or a pallet load of goods having tags attached, the transmissions by the tags would occur together and cause collisions, rendering the transmissions unusable due to mutual interference. A number of arbitration methods have been developed to enable a reader to sort and/or isolate and transact with these large populations of tags. These methods are known variously as anti-collision schemes or collision-arbitration algorithms.

In one example described in US 5,537,105 (corresponding to EP 494114 B1) by Marsh et al, the whole contents of which are incorporated herein, the transponders on receipt of an interrogation signal repeatedly transmit a response signal containing data which identifies the transponder. The interrogator detects successful identification of any transponder and briefly modifies the interrogation signal to indicate the successful identification. Each transponder includes a logic circuit responsive to a respective modification in the interrogation signal to cease transmission of its own response signal. The response signals are transmitted at random intervals until the identity of a transponder is successfully read and acknowledged by the reader and placed into a dormant or gagged state. US5699066 (corresponding to EP0585132) and PCT application GB98/01385 (corresponding to WO/985142) also describe methods in which the response signals are transmitted at pseudo-random intervals. The whole contents of EP0585132 and WO/985142 are incorporated herein by reference.

Other examples of such methods are described in US5699096, Cole WO 01/41043 A1, and Maletsky US6104279.

Methods have been used to improve the randomness of the response intervals. In EP 467036 B1, the whole contents of which are herein incorporated, the identification system uses a pseudo-random delay between transponder data transmissions. In this example, a linear recursive sequence generator is seeded by the transponder identification address to provide the pseudo-random delay between tag data transmissions. US5550547 describes a similar system in which the tag sends out a 64 bit ID code at intervals determined by a random number generator. US6104279 describes a system in which remote units re-transmit their bit pattern at random intervals. It further mentions that there are many techniques to produce a random number; for example the identification number can provide the seed for a random number generator permitting the user to individually seed each tag with a different random number.

Another method is based on slotted polling or slotted Aloha schemes in which tags randomly select a time slot in which to transmit and then transmit when it is their turn to do so. The theory is that because slots are randomly selected, sooner or later all tags will have had the opportunity to transmit messages 'in the clear'. WO 01/41043 describes such a system in which RFID tags randomly select a slot in which to transmit. In a practical implementation the slot selection by a tag is made on a pseudo-random basis, using a seed for a random number generator, which is derived from either part of the data held on the tag or by pre-programming a seed where the tag is manufactured. The possibility is great that many tags will have the same slot allocation choice. The fewer the number of slots to choose from, the greater will be the probability that many tags will 'randomly' select the same slot time and so will always collide and will therefore never be successfully read.

All the systems described rely on the use of random or pseudo-random timing of the tag transmission or reply signal. The random number generators (RNG) or pseudo-random number generators (PRNG) referred to in all the specifications above, rely on a recursive method of generating a random number from a seed. Because of their nature, seeded random number generators will always repeat the randomisation pattern and the pattern will be fully predictable. If the recursive random number generator had an infinite length, each seed would result in a unique pattern. However, RNG's have a finite length and in real applications will be typically 10 to 16 bits long. It is probable that in a cluster of 100 tags there will be several tags that will have a similar or identical transmit repeat [slot] pattern. If these tags were placed in the reader field at the same time, they would repeatedly transmit their identity together and hence would always clash and would never be successfully read. The problem is that seeded random number generators are not truly random (hence they are known as pseudo-random) and therefore do not provide the level of protection against clashes that is required for the efficient operation of the collision arbitration systems described in the cited patents.

In PRNG systems - the random pattern is only random for different seed values. The same seed value produces a predictable and consistent pattern. The finite length of an RNG will result in many tags having exactly the same repeat pattern. Furthermore, no matter how long the seed, only a subset of the seed will actually influence the pattern. The shorter the RNG shift register, the smaller the number of different random numbers or patterns.

### Summary of the invention

The present invention strives to overcome the disadvantages in the prior art and eliminate the aforesaid disadvantage of a pseudo-random slot selection or random transmit hold-off method.

The method of the present invention also strives to overcome the inherent problem of generating a random slot number or transmit hold off delay in RFID tags - when using a seeded random number generator. A seeded RNG is by its nature only pseudo-random in that for a given register length and tapped feedback points, a seed of a given value will always yield the same pattern.

In one aspect of the present invention there is provided an identification system comprising a reader including a transmitter for transmitting a signal and a plurality of transponders, each transponder including a receiver for receiving the reader signal and a transmitter for generating a response signal containing data which identifies the transponder, the transponder being adapted to repeat the transmission of the response signal at intervals which are random or pseudo-random in length, characterised by a circuit responsive to a physical characteristic of the transponder, the intervals between the response signals being directly or indirectly dependent on the output signal from said circuit.

The physical characteristic of the circuit, in a preferred embodiment part of an RFID chip, provides a "true random result", the output signal from the circuit affecting the randomness of the intervals between the response signals.

In a preferred embodiment said circuit comprises a counter driven by a clock, which may or may not be the same clock which used to drive the logic of the chip, the output from the counter providing a random number, or a random interval signal or providing a seed value for a random number generator. The counter and the clock may be reset upon activation of a POWER-ON-RESET (POR) circuit.

In another aspect of the invention there is provided a method of identifying a plurality of transponders comprising; exposing a transponder to RF whereby a capacitor is charged to a predetermined value to activate a POWER-ON-RESET (POR) circuit, the transponder being responsive to a command signal from a reader to repeat the transmission of a response signal, containing data which identifies the transponder, at intervals which are random or pseudo-random in length, characterised by a circuit responsive to activation of the POR to provide an output signal when the command signal has been received, the output signal providing a random number or a seed for a random number generator used to determine a slot selection or random transmit repeat (hold-off) value for the response signals.

In a further aspect of the invention there is provided a transponder comprising receiver means for receiving a reader signal, transmission means for transmitting a response signal containing data which identifies the transponder, the transponder being adapted to repeat the transmission of the response signal at intervals which are random or pseudo-random in length, characterised by a circuit responsive to a physical characteristic of the transponder, the intervals between the response signals being directly or indirectly dependent on the output signal from said circuit.

In a further aspect of the invention there is provided an integrated circuit for use in a transponder, comprising receiver means for receiving a reader signal, transmission means for transmitting a response signal containing data which identifies the transponder, the integrated circuit being adapted to repeat the transmission of the response signal at intervals which are random or pseudo-random in length, characterised by a random circuit responsive to a physical characteristic of the transponder, the intervals between the response signals being directly or indirectly dependent on the output signal from said circuit. In a preferred embodiment the integrated circuit is a RFID chip.

### Description

The invention will be described further by way of example with reference to the accompanying drawing, in which:
Figure 1 is a block diagram showing a circuit for use in a transponder according to a first embodiment of the invention and
Figure 2 shows a timing diagram illustrating the operation of four transponders of the present invention.
Figure 3 shows a block diagram of a typical RFID chip incorporating the circuit according to the first embodiment of the invention.

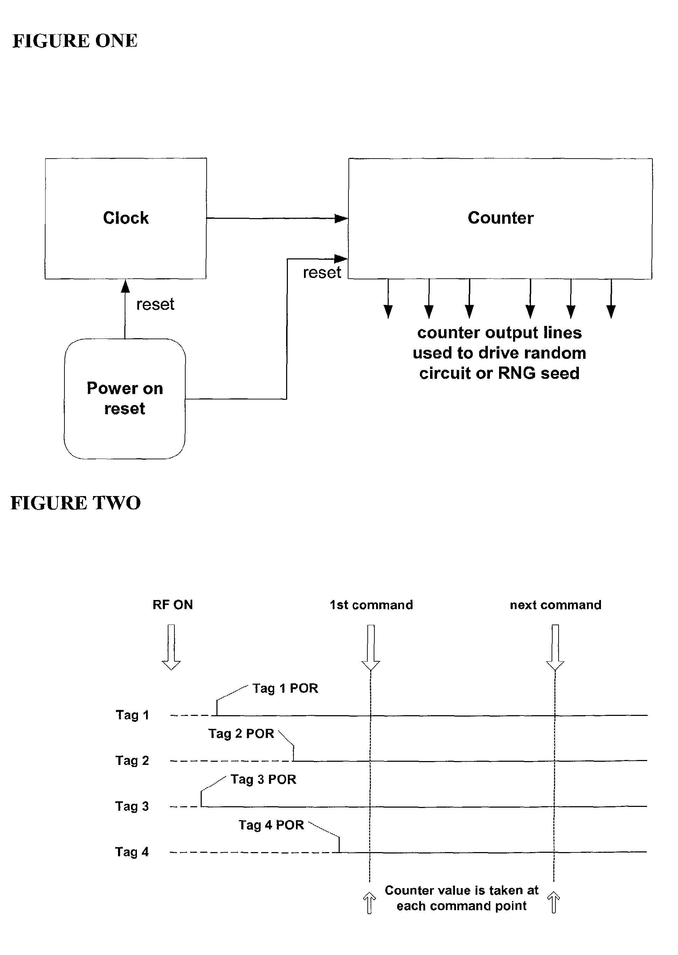

A transponder (tag) comprises an integrated circuit in the form of an RFID chip a part of which is shown in Figure 1. When the RFID chip is exposed to an RF field or when voltage is applied - the chip goes through a POWER-ON-RESET (POR) sequence. When the recovered DC supply voltage is stable, the POR circuit provides a signal to the circuits on the chip, which signal initialises or resets the chips circuits. At this point the clock starts running and drives the counter. The output of the counter is routed to the circuits in the chip that require a random number. Examples of these circuits could be the slot selection described in WO 01/41043, or the random transmit timer described in US5699096 or US6104279. It could also for example be used to derive the tag signature described in the international committee draft standard CD ISO 18000-6 type A or the signature described in EP1001366A2

The instant, that POR occurs with respect to the application of RF power, can vary substantially from chip to chip or from one power on sequence to the next, due to many factors. One of these factors is the delay due to the time it takes for the DC power storage capacitor to charge. Only when the capacitor has charged to a predetermined value will the POR circuit activate. This charging time is determined by a number of mechanisms:-
1. The RF voltage applied to the chip
2. The impedance of the antenna - in particular the series resistance - often called the Radiation Resistance
3. The size of the DC (VDD) storage capacitor
4. The actual POR voltage threshold
5. The leakage resistance in the circuit
6. The impedance of the rectifier diodes

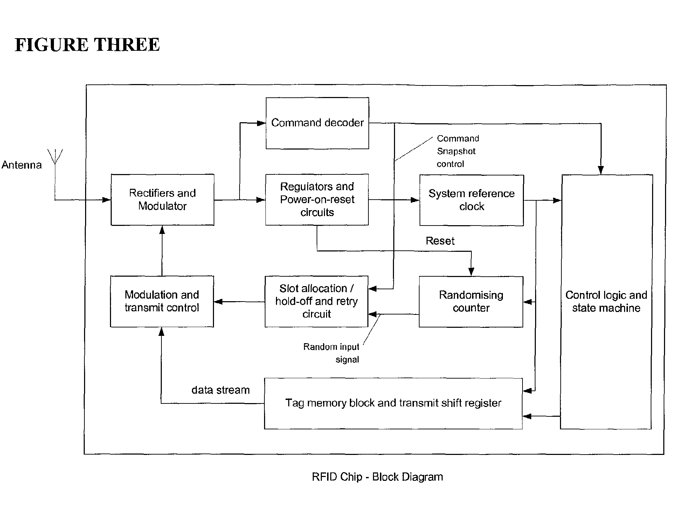

Referring to the timing diagram in Figure 2, at some point in time after the RF has been applied to the chip, a reader will issue a command which is received by all chips within range. It is probable that all chips within range will have started their clocks running at slightly different times due to the charge times of their DC storage capacitor and due to the slightly different POR characteristics between tags.

When the chips receive the command (which could be a wake-up or other command etc) the value in the counter in each of the chips will be different due to the slightly different start times. The value at the instant of the command (command snapshot) is used as the random number or as a seed for a random number generator used to determine the slot selection or random transmit repeat (hold-off) value. Therefore each chip will have a different value to be used for slot allocation or transmit hold-off time.

Furthermore if the counter in each and every chip continues to run and because no two counters will have the same clock period due to physical variances etc - the value in one chip's counter will be different (appear to be randomly different) with respect to the value in all other chips at any point in time. The clock frequency of each chip clock will be slightly different due to supply voltage variations, chip manufacturing variations, chip leakage etc. Therefore each time a command is received from a reader (causing a command snapshot) each chip will have a different value in their counter with respect to other chips and therefore the value that is used to allocate a transmit slot or hold off delay will be different for each chip and will be truly random.

It will be appreciated that the method described does not dictate the use of a random number generator - but that the snapshot value of the free running counter could be used directly to allocate a slot in which the tag will transmit, or alternatively the value could be used to seed a RNG. It will also be appreciated that the method disclosed could also be used (this is the preferred embodiment) to randomly assign a transmit hold-off period which need not conform to any slotting mechanism but which provides true randomisation of tag data transmissions. As the tag population increases, so does the total time it takes to read a population of tags. This is beneficial using this method, because the longer the free running counter continues to run, the more the count value will diverge from the counters in all other tags due to the natural variation in clock frequencies due to chip manufacturer process, temperature, varying RF fields etc.

It will be further appreciated that the method taught, is not only applicable to the randomisation of tag transmissions in RFID systems but this method may also be used to provide any random number that may be required in a tag circuit such as a session identity or tag signature etc.

Figure 3 shows the integration of the invention into an RFID chip. In the chip, the slot allocation circuit which could also be a transmit hold-off and retry circuit, is driven by two control signals. A first control signal is a random input signal derived from the system clock and the randomising counter. A second control signal, called the command snapshot control, causes the slot allocation circuit to take a snapshot of the random input signal value, and uses this value to allocate a slot in which the tag will transmit alternatively will use this value as a hold-off delay value for the next transmission by the tag. Each time the tag receives a command, which may or may not necessarily be directed to the tag itself, the command decoder generates a snapshot signal, thereby causing a fresh slot to be randomly selected or hold-off value to be randomly generated. It will therefore be evident to those skilled in the art, that the randomness of the method is entirely dependent on physical characteristics which will be different from every other RFID chip or tag.

It will be seen that the invention efficiently attains the objects set forth above, among those made apparent from the preceding description. Since certain changes may be made in the above embodiments without departing from the scope of the invention, it is intended that all matter contained in the above description or shown in the accompanying drawings be interpreted as illustrative and not in a limiting sense.

## Claims

1. An identification system comprising a reader including a transmitter for transmitting a signal and a plurality of transponders, each transponder including a receiver for receiving the reader signal and a transmitter for generating a response signal containing data which identifies the transponder, the transponder being adapted to repeat the transmission of the response signal at intervals which are random or pseudo-random in length, **characterised by** a circuit responsive to a physical characteristic of the transponder, the intervals between the response signals being directly or indirectly dependent on the output signal from said circuit.

2. An identification system as claimed in claim 1, wherein the physical characteristic of the circuit provides a "true random result", the output signal from the circuit affecting the randomness of the intervals between the response signals.

3. An identification system as claimed in claim 1 or claim 2, wherein the circuit is part of an RFID chip.

4. An identification system as claimed in any of the previous claims, wherein said circuit comprises a counter driven by a clock, which may or may not be the same clock used to drive the logic of the chip, the output from the counter providing a random number or providing a seed value for a random number generator

5. An identification system as claimed in claim 4, wherein the counter and the clock may be reset upon activation of a POWER-ON-RESET (POR) circuit.

6. A method of identifying a plurality of transponders comprising; exposing a transponder to RF whereby a capacitor is charged to a predetermined value to activate a POWER-ON-RESET (POR) circuit, the transponder being responsive to a command signal from a reader to cause or repeat the transmission of a response signal, containing data which identifies the transponder, at intervals which are random or pseudo-random in length, **characterised by** a circuit responsive to activation of the POR to provide an output signal when the command signal has been received, the output signal providing a random number or a seed for a random number generator, a slot selection or random transmit repeat (hold-off) value for the response signals being dependent directly or indirectly on said output signal.

7. A transponder comprising receiver means for receiving a reader signal, transmission means for transmitting a response signal containing data which identifies the transponder, the transponder being adapted to repeat the transmission of the response signal at intervals which are random or pseudo-random in length, **characterised by** a circuit responsive to a physical characteristic of the transponder, the intervals between the response signals being directly or indirectly dependent on the output signal from said circuit.

8. An integrated circuit for use in a transponder, comprising receiver means for receiving a reader signal, transmission means for transmitting a response signal containing data which identifies the transponder, the integrated circuit being adapted to repeat the transmission of the response signal at intervals which are random or pseudo-random in length, **characterised by** a random circuit responsive to a physical characteristic of the transponder, the intervals between the response signals being directly or indirectly dependent on the output signal from said circuit; in a preferred embodiment the integrated circuit is a RFID chip.
